(19) Europäisches Patentamt
European Patent Office
Office européen des brevets

(11) EP 0 884 378 B1

(12) **EUROPEAN PATENT SPECIFICATION**

(45) Date of publication and mention of the grant of the patent:
**14.08.2002 Bulletin 2002/33**

(21) Application number: **98110771.7**

(22) Date of filing: **12.06.1998**

(51) Int Cl.[7]: **C10M 159/22**, C10M 135/30, C10M 129/54, C10M 129/94, C07G 17/00
// (C10N10/04, 30:06)

# (54) Method for improving the friction reducing properties of a lubricating oil

Verfahren zur Verbesserung der reibungsmodifizierenden Eigenschaften von Schmierölen

Procédé d'amélioration des propriétés de modification de friction des huiles lubrifiantes

(84) Designated Contracting States:
**DE FR GB IT NL**

(30) Priority: **12.06.1997 JP 17107197**
**31.03.1998 JP 10329198**

(43) Date of publication of application:
**16.12.1998 Bulletin 1998/51**

(73) Proprietor: **TONEN CORPORATION**
**Chiyoda-Ku, Tokyo 100 (JP)**

(72) Inventors:
- **Taguchi, Shigeko**
**Kawagoe City, Saitama (JP)**
- **Ono, Megumi**
**Tachikawa City, Tokyo (JP)**
- **Tomizawa, Hirotaka**
**Tokorozawa City, Tokyo (JP)**

(74) Representative: **Dew, Melvyn John et al**
**ExxonMobil Chemical Europe Inc.**
**Law Technology**
**P.O.Box 105**
**1830 Machelen (BE)**

(56) References cited:
**EP-A- 0 168 880**
**EP-A- 0 767 236**
**GB-A- 1 194 503**
**US-A- 3 704 315**
**US-A- 4 719 023**
**US-A- 5 415 792**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

### Field of the Invention

This invention relates to a method of improving the friction reducing properties of a lubricating oil composition by the use of a specific chain-hydrocarbon-group-substituted metal salicylate having excellent friction reducing ability.

### Description of the Prior Art

It is the fundamental theme of lubrication to reduce friction and wear which occur at sliding surfaces of moving parts in machineries, devices, equipments and the like. Technical developments have conventionally been continued for the reduction of friction. Especially from the need for resource and energy saving, measures for the achievement of low friction and low wear by improvements in the quality of lubricating oils have also been investigated from a variety of viewpoints in recent years in the field of lubricating oils. From such efforts, it has become increasingly clear that, for the production of a lubricating oil excellent in friction characteristics, incorporation of additives in base stocks for lubricating oils to provide the base stocks with desired friction characteristics is an indispensable approach.

Accordingly a number of friction modifiers have been proposed to date, resulting in the use of fatty acids and their metal salts, alcohols, esters, amines and the like - all of which are of the oiliness improver type - and phosphate esters, phosphite esters, zinc dithio-phosphate and the like - all of which are of the extreme pressure agent type - in automatic transmission fluids, wet brake oils, sliding surface oils, plastic working oils and the like and also in the use of phosphate esters, phosphite esters, acidic phosphite ester amine salts, molybdenum dithiophosphate, molybdenum dithiocarbamate and the like - all of which are of the extreme pressure agent type - in engine oils, gear oils, cutting oils and the like. Meanwhile, an automatic transmission fluid was disclosed, which had been obtained by adding magnesium sulfonate used as a metallic detergent, especially over-based magnesium sulfonate having a base number of 300 mg-KOH/g or greater in a base stock in order to improve its friction characteristics (see JP Kokai 62-84190). Further, it has also been proposed to use calcium salicylate as a friction coefficient modifiers for automatic transmission fluids (see JP Kokai 5-163496).

No matter whether these friction modifiers are of the organic type or of the metallic type, their friction reducing effects however cannot be considered to be sufficient in practice depending on the use conditions. All of them are still insufficient in stable friction reducing effects as typified by magnesium sulfonate, calcium salicylate and the like the effects of which vary significantly depending on the kind, use conditions and the like of a lubricating oil. Therefore they are merely adjuvants for friction modifiers such as phosphate esters and molybdenum dithiocarbamate. If a metal salicylate having high friction reducing ability even when used by itself is realized, it is believed to find utility in a wider range of fields. There is accordingly an outstanding intense desire for the development of such a metal salicylate.

Prior published GB-A-1194503, EP-A-168880, US-A-5415792, US-A-4719023 and EP-A-767236 all describe in detail methods of producing and/or use of metal alkyl salicylates, whether or not sulphurised, in lubricating oil compositions. However, none of these describes the use of such metal salicylates as a friction reducing additive in such compositions nor indeed the benefit of using metal salicylates which carry a hydrocarbyl substitutent of a particular structure. In fact, EP-A-168880 which draws attention to use of such compounds as wear additives fails to disclose the nature of the alkyl groups whereas EP-767236 uses such additives for increasing friction.

In view of the technical developments on friction reducing technology and the circumstances of development of friction modifiers as described above, the present invention has as objects thereof the provision of a metal salicylate having friction reducing ability and also the provision of a lubricating oil composition containing the metal salicylate.

### Present Information

It has been discovered that a metal salicylate, which contains an alkyl group having a specific chain portion determinable by a carbon nuclear magnetic resonance measurement (which may hereinafter be referred to as "$^{13}$C-NMR measurement" as needed), has excellent friction reducing ability. It has also been found that the metal salicylate is useful as a friction modifier and its addition to a base stock for lubricating oil makes it possible to furnish a lubricating oil composition having improved friction characteristics and utility in many fields. Based on these findings, the present invention has now been completed.

Namely, the present invention relates to a method of improving the friction reducing properties of a friction modifier comprising a chain-hydrocarbon-group-substituted metal salicylate substituted by at least one chain hydrocarbon group, characterized in that the chain hydrocarbon group has an alkyl chain linearity of 20% or higher as determined by a $^{13}$C-NMR measurement.

The present invention also relates to a method of improving the friction reducing properties of lubricating oil composition characterized in that the lubricating oil composition comprises:

a lubricating base stock; and

1 ppm to 10,000 ppm, based on the whole weight of the lubricating oil composition, of a chain-hydrocarbon-group-substituted metal salicylate substituted by at least one chain hydrocarbon group having an alkyl chain linearity of 20% or higher as determined by a $^{13}C$-NMR measurement, said chain hydrocarbon group having an average carbon number of 12 or more per salicylic acid group.

The present invention will hereinafter be described in detail.

The chain-hydrocarbon-group-substituted metal salicylate, which is an effective component of the friction modifier used in the present invention, is formed basically of a salicylic acid (hydroxyaromatic carboxylic acid) group component, which has at least one chain hydrocarbon group bonded thereto, and a metal component, and for example, can be represented by the following formula (I):

$$(HO\text{-}R\text{-}COO)_xM \qquad (I)$$

It may consist of one type of the compound or may be a mixture of two or more compounds having different hydrocarbon groups.

In the above formula (I), R is an aromatic group component having at least one chain-hydrocarbon-group bonded thereto. M is a metal component of monovalence or a higher valence, and x stands for a number corresponding to the atomic valence of the metal component M. In the formula, the hydroxyl group can be in a form substituted by the same metal component as the metal component M or a different metal component. The following formula (II) exemplifies compounds in each of which the metal component M is a monovalent metal component.

$$MO\text{-}R\text{-}COOM \qquad (II)$$

In the above formula (II), R is an aromatic group component with at least one chain hydrocarbon group bonded thereto. The above-described compounds can each be subjected further to sulfurizing treatment or over-basing treatment, and may include compounds formed by the respective treatments. As the chain hydrocarbon group in the chain-hydrocarbon-group-substituted metal salicylate used in the present invention, those capable of meeting the following requirements are suitable.

As such, the following requirements can be mentioned:

(i) an alkyl group having an average carbon number of 12 or more per salicylic acid group; and

(ii) said alkyl group having [a] an alkyl chain linearity of 20% or higher,

both being as determined by $^{13}C$-NMR measurement.

Describing the above requirement (i), it is important for the exhibition of friction reducing effects that the chain hydrocarbon group of the chain-hydrocarbon-group-substituted metal salicylate used in the present invention is an alkyl group having an average carbon number of 12 or more per salicylic acid group. In particular, an alkyl group having an average carbon number of from 12 to 40 is preferred. An average carbon number smaller than 12 involves a potential problem that friction reducing effects may not be fully obtained. As the metal salicylate, one containing at least one alkyl group having 12 to 30 carbon atoms is preferred.

The term "average carbon number per salicylic acid group" as used herein indicates an average carbon number of alkyl groups as calculated by a $^{13}C$-NMR measurement by supposing that an aromatic carbon bonded to a carboxyl group is 1.

Specific examples of the above-described alkyl group can include dodecyl, tridecyl, tetradecyl, pentadecyl, hexadecyl, heptadecyl, octadecyl, nonadecyl, eicosyl, tetracosyl, pentacosyl, hexacosyl, heptacosyl, octacosyl, nonacosyl, triacontyl, pentatriacontyl, and octatriacontyl.

One of the principal features of the present invention resides in that the above alkyl group has a specific linearity as determined by a $^{13}C$-NMR measurement as indicated above under the requirement (ii), and is a requirement indispensable for the chain-hydrocarbon-group-substituted metal salicylate.

Namely, the chain-hydrocarbon-group-substituted metal salicylate used in the present invention has an alkyl chain linearity of 20% or higher, preferably 30% or higher as determined by $^{13}C$-NMR measurement.

Here, the term "alkyl chain linearity" is based on a unique concept established by the present inventors as a result of repetition of numerous experiments, and means the ratio of the number of carbon atoms in a linear portion located 5 or more atoms apart from an end of the alkyl group or 4 or more atoms apart from a branched site of the alkyl group to the total number of carbon atoms in the alkyl group. Accordingly, the alkyl chain linearity varies depending on the substituting site of the aromatic group to the alkyl group or the site of branching of the alkyl group. Specifically, the alkyl chain linearity is determined specifically by the following formula from a $^{13}C$-NMR measurement.

$$\text{Alkyl chain linearity (\%)} = \frac{\text{Integral intensity over a chemical shift range of from 29 ppm to 31 ppm}}{\text{Sum of all integral intensity over a chemical shift range of from 5 ppm to 60 ppm}} \times 100$$

Incidentally, the $^{13}C$-NMR measurement was conducted by converting the metal salicylate into its corresponding salicylic acid.

The present inventors recognized the existence of a correlation between the alkyl chain linearity of the chain-hydrocarbon-group-substituted metal salicylate and its friction reducing effects, and have ascertained that the metal salicylate exhibits better friction reducing effects as the linearity becomes higher and also that a linearity lower than 20% cannot exhibit the effects fully although a linearity of 20% or higher, especially of 30% or higher shows particularly marked effects.

A chain-hydrocarbon-group-substituted metal salicylate used in the present invention having excellent in friction reducing effects can still be obtained provided that its alkyl chain linearity as determined by a $^{13}C$-NMR measurement is 20% or higher, even when the metal salicylate contains two or more alkyl groups per salicylic acid group or is a mixture of two or more different compounds (metal salicylates). In particular, a metal salicylate, chain hydrocarbon groups each of which is a linear alkyl group having 12 or more carbon atoms, is preferred from the viewpoint that it can substantially improve friction reducing effects.

The metal component M shown in the above-described formula (I) or the like of the chain-hydrocarbon-group-substituted metal salicylate used in the present invention can be an alkali metal or an alkaline earth metal. Further, a metal of an atomic number in a range of from 12 to 56 is also suited. Specific examples can include sodium, potassium, lithium, calcium, magnesium and barium. In addition, aluminum, zinc, tin, chromium, copper, cobalt and the like are also effective. Particularly preferred metal components are alkaline earth metals such as calcium, magnesium and barium.

Typical illustrative compounds of the chain-hydrocarbon-group-substituted metal salicylate used in the present invention can be represented by the following formulas (III) to (VI):

(III)

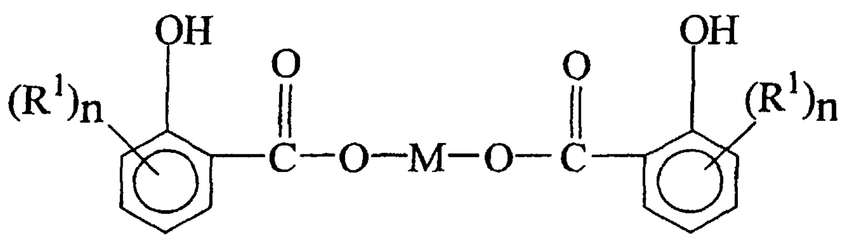

(IV) 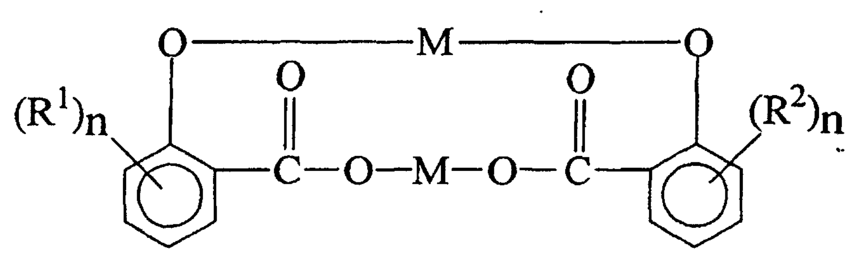

(V) 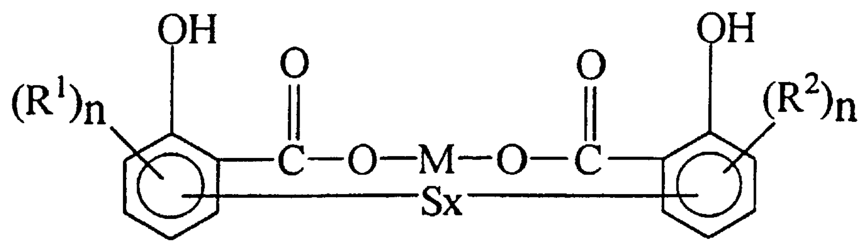

(VI) 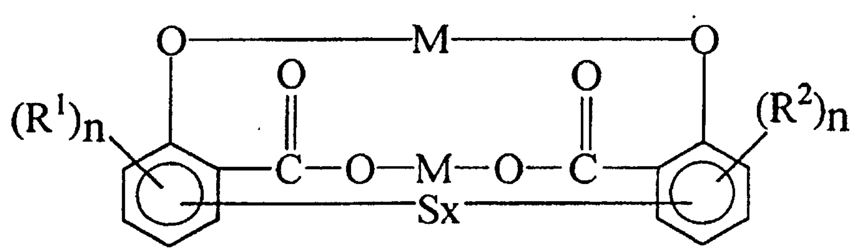

In each of the above formulas (III) to (VI), $R^1$ and $R^2$ are alkyl groups which may be the same or different, the average carbon number of the total carbon number of $R^1$ and the total carbon number of $R^2$, said average total carbon number being equivalent to the number of carbon atoms per salicylic acid group, may preferably be from 12 to 40, and the alkyl chain linearity as determined by a $^{13}C$-NMR measurement is 20% or higher. Specific examples of the alkyl group can include dodecyl, tridecyl, tetradecyl, heptadecyl, hexadecyl, octadecyl, nonadecyl, eicosyl, tetracosyl, pentacosyl, hexacosyl, heptacosyl, octacosyl, nonacosyl, and triacontyl. In the formulas (III) to (VI), M is appropriately an alkaline earth metal, although it can be other divalent metals described above. Further, n indicates the number of alkyl groups substituted on the aromatic group and is an integer of from 1 to 4, preferably an integer of 1 to 2. In the respective formulas, they can be the same or different. In the above formulas (V) and (VI), x is an integer of from 1 to 5.

The chain-hydrocarbon-group-substituted metal salicylate used in the present invention can be a basic salt or over-based salt in addition to a neutral salt. Its salt type can be chosen as desired depending on its application.

The chain-hydrocarbon-group-substituted metal salicylate used in the present invention can be prepared by various processes. For example, a basic metal compound is added to and reacted with an mixture of alkylsalicylic acids to form a metal salt. At the same time, liberated water is removed. Further, the basic metal compound is added to the reaction mixture, followed by the removal of liberated water. The metal salicylate can be prepared by repeating these procedures. Further, a sulfurized metal alkylsalicylate can be prepared, for example, by using the process disclosed in JP kokoku 5-80518. An over-based salt can be one prepared by a conventional process, and can be prepared, for example, by dispersing $M(OH)_2$ or $MCO_3$ (M: alkaline earth metal or the like) in a colloidal form in a salicylate salt. Namely, over-basing can be conducted by adding an acidic substance such as carbon dioxide to a salicylate salt. For example, a process disclosed in European Patent Publication 351052A may be used.

In addition, an alkylsalicylate metal salt mixture with an alkyl chain linearity controlled within the above-described specific range can also be obtained by mixing various metal alkylsalicylates.

As has been described above, the present invention provides the use of a friction modifier, especially a friction modifier for lubricating oils, which is composed of chain-hydrocarbon-group-substituted metal salicylate described above. This friction modifier can be used by dissolving the metal salicylate in a hydrocarbon or another solvent or as a component of an additive package in combination with other additives.

A description will next be made about the lubricating oil composition used in the present invention.

No particular limitation is imposed on the lubricating base stock insofar as it is generally employed as a base stock. The base stock can be any one of mineral base stocks, synthetic base stocks and vegetable base stocks, or can be a blended base stock of two or more of these base stocks.

As a mineral base stock, it is possible to use, for example, a mineral oil obtained by the treatment of a lubricating oil fraction, which is in turn available by vacuum distillation of an atmosphere distillation residue of paraffin-base, neutral or naphthene-base crude oil, through a refining step such as solvent refining, hydrocracking, hydro-refining, catalytic dewaxing, solvent dewaxing or clay treatment; a mineral oil obtained by subjecting a vacuum distillation residue to solvent deasphalting and then treating the resulting deasphalted oil through the above-described refining step; a mineral oil obtained by isomerizing wax components; or a blended oil thereof. In the above solvent refining, an aromatic extraction solvent such as phenol, furfural or N-methylpyrrolidone can be used, whereas as a solvent for the solvent dewaxing, liquefied propane, MEK/toluene, MEK/MIBK, or the like can be used. Among the above-described mineral base stocks, hydro-refined oil is preferred from the standpoint of oxidation stability and the like, and one containing, for example, 2 wt% or less of aromatic hydrocarbons and 90 wt% or more of saturated hydrocarbons can be used.

Examples of synthetic base stocks, on the other hand, can include poly($\alpha$-olefin) oligomers; polybutene; alkylbenzenes; polyol esters such as trimethylolpropane esters and pentaerythritol esters; polyoxyalkylene glycols; polyoxyalkylene glycol esters; polyoxyalkylene glycol ethers; dibasic acid esters; phosphate esters; and silicone oils. These base stocks can be used either singly or in combination.

Further, usable examples of vegetable base stocks can include castor oil, rape seed oil, palm oil, coconut oil, olive oil and sunflower oil.

As a lubricating base stock such as that described above, it is possible to use a blended base stock obtained by suitably blending plural base stocks so that the blended base stock has a viscosity and other properties desired for the intended application of the lubricating oil composition. For example, it is preferred to control the kinematic viscosity at 100°C in a range of from 2 $mm^2/s$ to 30 $mm^2/s$, especially from 3 $mm^2/s$ to 10 $mm^2/s$ for a lubricating oil for internal combustion engines, the kinematic viscosity at 100°C in a range of from 2 $mm^2/s$ to 30 $mm^2/s$, especially from 3 $mm^2/s$ to 15 $mm^2/s$ for an automatic transmission fluid, and the kinematic viscosity at 40°C in a range of from 10 $mm^2/s$ to 1,000 $mm^2/s$, especially from 20 $mm^2/s$ to 500 $mm^2/s$.

The chain-hydrocarbon-group-substituted metal salicylate used in the lubricating oil composition according to the present invention can bring about marked friction reducing effects by its addition to the lubricating base stock in a proportion of from 0.01 to 10 wt%, preferably from 0.05 to 5 wt% based on the whole weight of the lubricating oil composition or in a proportion of from 1 ppm to 10,000 ppm, preferably from 50 ppm to 5,000 ppm in terms of the metal, although the proportion varies depending on the application field of the lubricating oil.

According to a further embodiment, the present invention relates to the use of a metal salicylate substituted by at least one chain hydrocarbon group which has an alkyl chain linearity as herein defined of 20% or higher as determined by a carbon nuclear magnetic resonance measurement ($^{13}C$-NMR measurement) to improve the friction reducing properties of a lubricating oil composition.

To the lubricating oil composition according to the present invention, it is possible to add further additives selected from viscosity index improvers, ashless dispersants, oxidation inhibitors, extreme pressure agents, wear inhibitors, metal deactivators, pour-point depressants, rust inhibitors, other friction modifiers and other additives as needed.

Illustrative usable examples of the viscosity index improvers can include polymethacrylates, polyisobutylenes, ethylene-propylene copolymers, and hydrogenated styrene-butadiene copolymers. These viscosity index improvers are used generally in a proportion of from 3 wt% to 35 wt%.

Illustrative of the ashless dispersants can be polybutenylsuccinimides, polybutenylsuccinamides, benzylamines, and succinate esters. They can be used generally in a proportion of from 0.05 wt% to 7 wt%.

Illustrative examples of the oxidation inhibitors can include amine-type oxidation inhibitors such as alkylated diphenylamines, phenyl-$\alpha$-naphthylamine and alkylated phenyl-$\alpha$-naphthylamines; phenolic oxidation inhibitors such as 2,6-di-t-butylphenol and 4,4'-methylene-bis(2,6-di-t-butylphenol); and zinc dithiophosphate. They can be used generally in a proportion of from 0.05 wt% to 5 wt%.

Illustrative of the extreme pressure agents can be dibenzyl sulfide and dibutyl disulfide. They can be used generally in a proportion of from 0.05 wt% to 3 wt%.

Illustrative examples of the metal deactivators can include benzotriazole, benzotriazole derivatives, and thiadiazole. They can be used generally in a proportion of from 0.01 wt% to 3 wt%.

Illustrative examples of the metal deactivators can include benzotriazole, benzotriazole derivatives, and thiadiazole. They can be used generally in a proportion of from 0.01 wt% to 3 wt%.

Illustrative of the pour-point depressants can be ethylene-vinyl acetate copolymers, chlorinated paraffin-naphthalene condensation products, chlorinated paraffin-phenol condensation products, polymethacrylates, and polyalkylstyrenes. They can be used generally in a proportion of from 0.1 wt% to 10 wt%.

Illustrative of the wear inhibitors can be phosphate esters, zinc thiophosphate, and sulfur compounds. They can be used generally in a proportion of from 0.01 wt% to 5 wt%.

As preferred embodiments of the present invention, it is possible to provide in a lubricating oil composition:

(i) a friction modifier for lubricating oils, which comprises chain-hydrocarbon-group-substituted metal salicylate substituted by at least one chain hydrocarbon group, wherein the chain hydrocarbon group is an alkyl group having an average carbon number of from 12 to 40 per salicylic acid group and an alkyl chain linearity of 20% or higher as determined by a $^{13}C$-NMR measurement.

(ii) a friction modifier for lubricating oils, which comprises chain-hydrocarbon-group-substituted metal salicylate substituted by at least one chain hydrocarbon group, wherein the chain hydrocarbon group is an alkyl group having an average carbon number of from 12 to 40 per salicylic acid group and an alkyl chain linearity of 25% or higher as determined by a $^{13}C$-NMR measurement.

(iii) a lubricating base stock; and
chain-hydrocarbon-group-substituted metal salicylate, wherein the chain hydrocarbon group is an alkyl group having an average carbon number of from 12 to 40 per salicylic acid group and a chain linearity of 20% or higher as determined by a $^{13}C$-NMR measurement, and said metal salicylate having been added in a proportion of from 1 ppm to 10,000 ppm in terms of the metal thereof based on the whole weight of the lubricating oil composition.

(iv) a lubricating base stock composed of a hydro-refined oil containing 2 wt% or less of aromatic hydrocarbons and 90 wt% or more of saturated hydrocarbons; and
chain-hydrocarbon-group-substituted metal salicylate, wherein the chain hydrocarbon group is an alkyl group having an average carbon number of from 12 to 40 per salicylic acid group as determined by a $^{13}C$-NMR measurement and an alkyl chain linearity of 20% or higher as determined by the $^{13}C$-NMR measurement, and said metal salicylate having been added in a proportion of from 1 ppm to 10,000 ppm in terms of the metal thereof based on the whole weight of the lubricating oil composition.

(v) a lubricating base stock; and
chain-hydrocarbon-group-substituted metal salicylate, wherein the chain hydrocarbon group is an alkyl group having an average carbon number of from 15 to 25 per salicylic acid group as determined by a $^{13}C$-NMR measurement and an alkyl chain linearity of 25% or higher as determined by the $^{13}C$-NMR measurement, and said metal salicylate having been added in a proportion of from 50 ppm to 5,000 ppm in terms of the metal thereof based on the whole weight of the lubricating oil composition.

(vi) a lubricating base stock; and
chain-hydrocarbon-group-substituted metal salicylate, wherein the chain hydrocarbon group is an alkyl group having an average carbon number of from 12 to 40 per salicylic acid group and an alkyl chain linearity of 20% or higher as determined by the $^{13}C$-NMR measurement, said metal salicylate having been added in a proportion of from 30 ppm to 10,000 ppm in terms of the metal thereof based on the whole weight of the lubricating oil composition, and at least one of 5 wt% to 30 wt% of a viscosity index improver, 0.1 wt% to 5 wt% of an ashless dispersant, 0.1 wt% to 3 wt% of an oxidation inhibitor, 0.05 wt% to 4 wt% of a wear inhibitor and 0.05 wt% to 2.5 wt% of a metal deactivator can be added.

As has been described above, the friction modifier used in the present invention, which comprises a chain-hydrocarbon-group-substituted metal salicylate, can be used not only in lubricating oils but also in fuel oils without limitations. It can be used in lubricating oils such as hydraulic working oils, wet brake oils, sliding surface oils, plastic working oils and cutting oils in addition to automatic transmission fluids, lubricating oils for internal combustion engines, and gear oils. It can also be used in lubricating oils in any other fields insofar as the friction reducing effects of the chain-hydrocarbon-group-substituted metal salicylate can be exhibited.

Examples

The present invention will next be described specifically by Examples and Comparative Examples. It is however to be noted that the Examples and the like are to primarily demonstrate the friction reducing effects of chain-hydrocarbon-group-substituted metal salicylates according to the present invention and that the present invention shall not be limited by the Examples and the like.

The alkyl chain linearities of the metal salicylates employed in the following Examples and the like and, as performance evaluation of lubricating oil compositions, friction coefficients were measured by the following methods.

(i) Measuring method of alkyl chain linearity:

Each metal alkylsalicylate was converted into its corresponding alkylsalicylic acid, and under the following measuring conditions, its $^{13}C$-NMR spectrum was measured. Further, its alkyl chain linearity was calculated in accordance with the below-described formula.

| Measuring conditions | |
|---|---|
| Used instrument | EX400 (manufactured by JEOL Ltd.) |
| Observed nucleus | $^{13}C$ |
| Observing frequency | 100.50 MHz |
| Measuring mode | Inverse gated $^1H$ decoupling |
| Internal standard | TMS (= 0 ppm) |
| Relaxation reagent | $Cr(acac)_3$ |
| Solvent | $CDCl_3$ |
| Quantity of sample | 300 mg |
| Temperature | 30°C |

$$\text{Alkyl chain linearity (\%)} = \frac{\text{Integral intensity over the chemical shift range of from 29 ppm to 31 ppm}}{\text{Sum of all integral intensity over the chemical shift range of from 5 ppm to 60 ppm}} \times 100$$

(ii) Performance evaluation

Friction coefficient measuring method

Concerning each lubricating oil composition added with its corresponding metal alkylsalicylate in a predetermined proportion, its friction coefficient was measured under the following conditions by using "LFW-1" as a testing machine.

| Friction materials: | Steel/steel |
|---|---|
| Load | 200 lb |
| Oil temperature | 80°C |
| Revolution speed | 600 rpm |
| Measuring period | 30 minutes |

Example 1

Provided was Calcium Alkylsalicylate 1 (total base number: 60 mg-KOH/g), which had an average alkyl carbon number of 20 per salicylic acid group and an alkyl chain linearity of 46.2%. A lubricating oil composition was formulated by adding the salicylate to a refined mineral oil "100SN" (4.2 $mm^2/s$ at 100°C) in a proportion of 250 ppm in terms of

calcium based on the whole weight of the lubricating oil composition. The friction coefficient of the resultant lubricating oil composition was measured by the above-described method. It was found to be 0.09.

Example 2

A lubricating oil composition was formulated by using the same base stock as in Example 1 except that the proportion of Calcium Alkylsalicylate 1 was increased from 250 ppm to 500 ppm in terms of calcium. When subjected to a performance evaluation, its friction coefficient was found to be 0.08.

Example 3

Provided was Calcium Alkylsalicylate 2 (total base number: 280 mg-KOH/g), which had an average alkyl carbon number of 21 per salicylic acid group and an alkyl chain linearity of 28.5%. A lubricating oil composition was formulated by adding the salicylate to a lubricating base stock, which was the same as that employed in Example 1, in a proportion of 1,200 ppm in terms of calcium based on the whole weight of the lubricating oil composition. The resultant lubricating oil composition was subjected to the above-described performance evaluation. Its friction coefficient was found to be 0.10.

Example 4

A lubricating oil composition was formulated in exactly the same manner as in Example 3 except that the proportion of Calcium Alkylsalicylate 2 was increased from 1,200 ppm to 1,800 ppm in terms of calcium. The resultant lubricating oil composition was subjected to a performance evaluation. Its friction coefficient was found to be 0.10.

Comparative Example 1

The lubricating base stock alone was subjected to a performance evaluation. Its friction coefficient was found to be 0.14.

Comparative Example 2

Provided was Calcium Alkylsulfonate 3 (total base number: 270 mg-KOH/g), which had an average alkyl carbon number of 20 per salicylic acid group and an alkyl chain linearity of 16.4%. A lubricating oil composition was formulated by adding the salicylate to a lubricating base stock, which was the same as that employed in Example 1, in a proportion of 1,800 ppm in terms of calcium based on the whole weight of the lubricating oil composition. As a result of a performance evaluation, its friction coefficient was found to be 0.12.

The kinds and properties of the calcium alkylsalicylates used in the Examples and the like are shown in Table 1, and the results of the performance evaluations of the lubricating oil compositions added with the respective calcium alkylsalicylates are presented in Table 2.

TABLE 1

| Kind | Average Alkyl Carbon Number Per Salicylic Acid Group | Alkyl Chain Linearity | Total Base Number |
|---|---|---|---|
| Calcium alkylsalicylate 1 | 20 | 46.2% | 60 mg-KOH/g |
| Calcium alkylsalicylate 2 | 21 | 28.5% | 280 mg-KOH/g |
| Calcium alkylsalicylate 3 | 20 | 16.4% | 270 mg-KOH/g |

TABLE 2

| | Example | | | | Comparative Example | |
|---|---|---|---|---|---|---|
| | 1 | 2 | 3 | 4 | 1 | 2 |
| Base stock | Refined mineral oil, 100SN | | | | | |
| Proportion of additive (Ca concentration, ppm) | | | | | | |
| Calcium alkylsalicylate 1 | 250 | 500 | - | - | - | - |
| Calcium alkylsalicylate 2 | - | - | 1200 | 1800 | - | - |
| Calcium alkylsalicylate 3 | - | - | - | - | - | 1800 |
| Performance evaluation | | | | | | |
| Friction coefficient | 0.09 | 0.08 | 0.10 | 0.10 | 0.14 | 0.12 |

From the above Examples and Comparative Examples, it has been ascertained that a frictional coefficient can be lowered where the alkyl chain linearity in a metal alkylsalicylate is 20% or higher (Examples 1 and 2) but a smaller alkyl chain linearity cannot bring about any low frictional coefficient even if the proportion of the metal alkylsalicylate is increased (Comparative Example 2). From these results, it has become evident that the alkyl chain linearity of a chain-hydrocarbon-group-substituted metal alkylsalicylate is an important principal factor governing friction characteristics.

Thus it is seen that the use of a chain-hydrocarbon-group-substituted metal salicylate containing as the chain hydrocarbon group at least one chain hydrocarbon group having an alkyl chain linearity of 20% or higher has high friction reducing effects, as a friction modifier for lubricating oils, and can improve their friction characteristics.

## Claims

1. A method for improving the friction reducing properties of a lubricating oil composition comprising adding to said composition a friction modifier comprising a metal salicylate substituted by at least one chain hydrocarbon group, **characterised in that** said chain hydrocarbon group has an alkyl chain linearity as herein defined of 20% or higher as determined by a carbon nuclear magnetic resonance measurement ($^{13}C$-NMR measurement), said chain hydrocarbon group having an average carbon number of 12 or more per salicylic acid group.

2. A method according to Claim 1 wherein the chain hydrocarbon group is one or more alkyl groups each of which has 12-40 carbon atoms on average per salicylic acid group as measured by $^{13}C$-NMR measurement.

3. A method according to Claim 1 or 2 wherein the chain hydrocarbon group has an alkyl chain linearity of 30% or higher as determined by $^{13}C$-NMR measurement.

4. A method according to any one of the preceding Claims wherein said metal salicylate is added to the composition in a proportion of 1 ppm to 10,000 ppm in terms of the chain hydrocarbon group substituted metal salicylate thereof based on the whole weight of said lubricating oil composition.

5. A method according to any one of the preceding Claims wherein said composition comprises further at least one additive selected from viscosity index improvers, ashless dispersants, anti-oxidants, extreme pressure agents, wear inhibitors, metal deactivators, pour point depressants, rust inhibitors and other friction modifiers.

6. Use of a metal salicylate substituted by at least one chain hydrocarbon group which has an alkyl chain linearity as herein defined of 20% or higher as determined by a carbon nuclear magnetic resonance measurement ($^{13}C$-NMR measurement), said chain hydrocarbon group having an average carbon number of 12 or more per salicylic acid group, to improve the friction reducing properties of a lubricating oil composition.

## Patentansprüche

1. Verfahren zur Verbesserung der Reibungsverminderungseigenschaften einer Schmierölzusammensetzung, bei dem der Zusammensetzung Reibungsmodifizierungsmittel zugefügt wird, das Metallsalicylat enthält, das durch mindestens eine Kettenkohlenwasserstoffgruppe substituiert ist, **dadurch gekennzeichnet, dass** die Kettenkohlenwasserstoffgruppe eine Alkylkettenlinearität wie hier definiert von 20 % oder höher hat, bestimmt mittels Kohlenstoffkernresonanzmessung ($^{13}C$-NMR-Messung), wobei die Kettenkohlenwasserstoffgruppe eine durchschnittliche Kohlenstoffzahl von 12 oder mehr pro Salicylsäuregruppe aufweist.

2. Verfahren nach Anspruch 1, bei dem die Kettenkohlenwasserstoffgruppe eine oder mehrere Alkylgruppen mit jeweils durchschnittlich 12 bis 40 Kohlenstoffatomen pro Salicylsäuregruppe ist, gemessen mittels $^{13}C$-NMR-Messung.

3. Verfahren nach Anspruch 1 oder 2, bei dem die Kettenkohlenwasserstoffgruppe eine Alkylkettenlinearität von 30 % oder höher hat, bestimmt mittels $^{13}C$-NMR-Messung.

4. Verfahren nach einem der vorhergehenden Ansprüche, bei dem das Metallsalicylat der Zusammensetzung in einem Anteil von 1 ppm bis 10 000 ppm Metall als kettenkohlenwasserstoffgruppensubstituiertes Metallsalicylat zugegeben wird, bezogen auf das Gesamtgewicht der Schmierölzusammensetzung.

5. Verfahren nach einem der vorhergehenden Ansprüche, bei dem die Zusammensetzung ferner mindestens ein Additiv ausgewählt aus Viskositätsindexverbesserern, aschefreien Dispergiermitteln, Antioxidantien, Extremdruckmitteln, Verschleißschutzmitteln, Metalldeaktivatoren, Stockpunktsenkungsmitteln, Rostschutzmitteln und anderen Reibungsmodifizierungsmitteln enthält.

6. Verwendung von Metallsalicylat, das durch mindestens eine Kettenkohlenwasserstoffgruppe substituiert ist, die eine Alkylkettenlinearität wie hier definiert von 20 % oder höher hat, bestimmt mittels Kohlenstoffkernresonanzmessung ($^{13}$C-NMR-Messung), wobei die Kettenkohlenwasserstoffgruppe eine durchschnittliche Kohlenstoffzahl von 12 oder mehr pro Salicylsäuregruppe aufweist, zur Verbesserung der Reibungsverminderungseigenschaften einer Schmierölzusammensetzung.

## Revendications

1. Procédé pour améliorer les propriétés de réduction du frottement d'une composition d'huile lubrifiante, comprenant l'addition à ladite composition d'un modificateur de frottement comprenant un salicylate de métal substitué par au moins un groupe hydrocarboné en chaîne, **caractérisé en ce que** ledit groupe hydrocarboné en chaîne a une linéarité de chaîne alkyle telle que définie dans la présente demande de 20% ou plus, comme déterminé par une mesure de la résonance magnétique nucléaire du carbone (mesure du $^{13}$C-RMN), ledit groupe hydrocarboné en chaîne ayant un nombre moyen d'atomes de carbone de 12 ou plus par groupe acide salicylique.

2. Procédé selon la revendication 1, dans lequel le groupe hydrocarboné en chaîne est un où plusieurs groupes alkyle dont chacun a 12 à 40 atomes de carbone en moyenne par groupe acide salicylique, comme mesuré par mesure du $^{13}$C-RMN.

3. Procédé selon la revendication 1 ou 2, dans lequel le groupe hydrocarboné en chaîne a une linéarité de chaîne alkyle de 30% ou plus, comme déterminé par mesure du $^{13}$C-RMN.

4. Procédé selon l'une quelconque des revendications précédentes, dans lequel ledit salicylate de métal est ajouté à la composition en proportion de 1 ppm à 10 000 ppm en termes de salicylate de métal substitué par un groupe hydrocarboné en chaîne par rapport au poids total de ladite composition d'huile lubrifiante.

5. Procédé selon l'une quelconque des revendications précédentes, dans lequel ladite composition comprend en outre au moins un additif choisi parmi des promoteurs de l'indice de viscosité, des dispersants sans cendre, des anti-oxydants, des agents de pressions extrêmes, des inhibiteurs d'usure, des désactivateurs métalliques, des améliorants de point d'écoulement, des inhibiteurs de rouille et d'autres modificateurs de frottement.

6. Utilisation d'un salicylate de métal substitué par au moins un groupe hydrocarboné en chaîne qui a une linéarité de chaîne alkyle comme défini dans la présente demande de 20% ou plus comme déterminé par une mesure de la résonance magnétique nucléaire du carbone (mesure du $^{13}$C-RMN), ledit groupe hydrocarboné en chaîne ayant un nombre moyen d'atomes de carbone de 12 ou plus par groupe acide salicylique pour améliorer les propriétés réductrices de frottement d'une composition d'huile lubrifiante.